(19) Europäisches Patentamt

European Patent Office

Office européen des brevets

(11) **EP 4 607 431 A1**

(12) **EUROPEAN PATENT APPLICATION**

(43) Date of publication:
**27.08.2025   Bulletin 2025/35**

(21) Application number: **25157853.0**

(22) Date of filing: **14.02.2025**

(51) International Patent Classification (IPC):
**G06Q 30/0201** *(2023.01)*    **G06Q 30/0202** *(2023.01)*
**G06Q 30/0204** *(2023.01)*    **G06Q 30/0283** *(2023.01)*

(52) Cooperative Patent Classification (CPC):
**G06Q 30/0201; G06Q 30/0202; G06Q 30/0205;
G06Q 30/0206; G06Q 30/0283**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.02.2024  IN 202421012544**

(71) Applicant: **Tata Consultancy Services Limited
Maharashtra (IN)**

(72) Inventors:
• **THIRUNAVUKKARASU, Jeisobers**
  **600098 Tamil Nadu (IN)**

• **JUJHALA, Naga Krishna Kiran**
  **560066 Bangalore, Karnataka (IN)**
• **GOPAL, Dhanasekaran**
  **600119 Tamil Nadu (IN)**
• **ELLAPPASAMY, Karthik**
  **600119 Tamil Nadu (IN)**
• **MUKHERJEE, Jayanta**
  **700091 Kolkata, West Bengal (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR COMPETITIVE PRICING INCORPORATING CUSTOMER PERCEPTION OF COMPETITOR PRICES**

(57)    This disclosure relates generally to competitive pricing and more particularly to a method and system for competitive pricing using customer perception. Conventional methods for competitive pricing consider techniques such as research analysis, strategic decision making, marketing strategy and the like. However, these techniques do not provide accurate competitive pricing. Embodiments of the present disclosure considers customer perception by capturing ideal delayed response and ideal left-over effect of competitor price based on data captured during sales process of an item. Accuracy of estimation of competitor elasticity is maximized by applying specific dynamic weights to capture ideal delayed response and ideal left-over competitor price effect of the item. A customized model is developed for determining sales of the item and further to estimate yield of the item considering other miscellaneous factors. The disclosed method is used to find the ideal price of the item which provides business advantage to the retailer.

300

| Input: Retailer input and plurality of historical competitor prices | 302 |

↓

| Obtain plurality of derived competitor prices by applying a plurality of dynamic weights | 304 |

↓

| Determine an ideal dynamic weight | 306 |

↓

| Estimate sales unit of retailer item from a customized model | 308 |

↓

| Estimate yield of the retailer item | 310 |

↓

| Determine ideal price | 312 |

FIG. 3

EP 4 607 431 A1

**Description**

CROSS-REFERENCE TO RELATED APPLICATIONS AND PRIORITY

The present application claims priority to Indian application no. 202421012544, filed on 21 February 2024.

TECHNICAL FIELD

The disclosure herein generally relates to retail item pricing, and, more particularly, to a method and system for competitive pricing considering customer perception of competitor prices.

BACKGROUND

Pricing of items is an essential element in marketing. There is a need of good pricing strategies and lots of research has been done in the area of pricing. However, most of the pricing techniques available in the art does not consider the complex nature of price sensitivity in competitive markets. Competitive pricing is a marketing strategy where retailer set prices for their items based on competitors' prices. There are many benefits of competitive pricing. Competitive pricing can help to incorporate discount strategies and tactics, prevent market share loss, increase profit margins, and help retailers to include dynamic pricing strategies.

Few available techniques for competitive pricing are based on price-sensitive items, capitalization on competitor's low stock levels, frame pricing according to regions and time slots, raising prices on related products, business rules and the like. Other competitor pricing techniques consider time gap between two pricing changes like retailer store price change and competitor reaction price. Other competitor pricing models include price skimming, penetration pricing, price matching, premium pricing, and loss leader pricing. Price skimming is used when there is no competition for an item. Penetration pricing is when the retailer offers a low price for a new item in a market and this discourages a competitor to enter into the market. Price matching happens when the retailer matches the price with the price of competitors. Premium pricing is used for branding a retailer item as luxury or premium and a high price is charged for the particular item. Loss leader pricing happens when the retailer wants to expand the customer circle. For this the retailer offers a low price for an item. However, several methods use competitor pricing intelligence, wherein strategic decision making, marketing strategy, product development are incorporated. Also, so many online research analyses, price comparisons, customer surveys, and data analysis are performed for effective competitor pricing. However, these available methods do not provide an accurate competitive pricing which enables business advantage for the retailer.

SUMMARY

Embodiments of the present disclosure present technological improvements as solutions to one or more of the above-mentioned technical problems recognized by the inventors in conventional systems. For example, in one embodiment, a method for competitive pricing incorporating customer perception of competitor prices is provided. The method includes receiving for a retailer item (i) a retailer input comprising a plurality of historical sales units of the retailer item corresponding to a plurality of historical retailer prices of the retailer item and a plurality of miscellaneous data associated with a retailer. Further, the method includes, applying a plurality of dynamic weights on the plurality of historical competitor prices to obtain a plurality of derived competitor prices corresponding to a plurality of scenarios. Each derived competitor price of the plurality of derived competitor prices is obtained by capturing a perception of competitor price for the retailer item considering a left-over effect and a delayed response of customers on the plurality of historical competitor prices. Furthermore, the method includes, determining from the plurality of dynamic weights an ideal dynamic weight associated with an optimal derived competitor price for each competitor amongst the set of competitors using a regression model. Further, the method includes, estimating sales units of the retailer item associated with the retailer using a retailer price within a price range specified by the retailer, the optimal derived competitor price for each competitor, and the competitor price elasticity associated with the ideal dynamic weight in a customized model. Further, the method includes, estimating an expected revenue and an expected margin associated with the retailer price within the price range specified by the retailer and the optimal derived competitor price for each competitor using the sales units of the retailer item. Furthermore, the method includes, estimating a yield of the retailer item associated with the retailer from the sales units of the retailer item along with the expected revenue and the expected margin associated with the retailer price within the price range specified by the retailer and the optimal derived competitor price for each competitor to obtain a plurality of yields associated with the set of competitors. Finally, the method includes, determining an ideal price of the retailer item for the retailer, wherein the ideal price of the retailer item within the price range specified by the retailer corresponds to an optimum yield amongst the plurality of yields.

In another aspect, a system for competitive pricing incorporating customer perception of competitor prices is provided. The system comprises memory storing instructions; one or more communication interfaces; and one or more hardware processors coupled to the memory via the one or more communication interfaces, wherein the one or more hardware processors are configured by the instructions to receive for a retailer item (i) a retailer input comprising a plurality of historical sales units of the retailer item corresponding to a plurality of historical retailer prices of the retailer item and a plurality of miscellaneous data associated with a retailer. Further, the system includes, applying a plurality of dynamic weights on the plurality of historical competitor prices to obtain a plurality of derived competitor prices corresponding to a plurality of scenarios. Each derived competitor price of the plurality of derived competitor prices is obtained by capturing a perception of competitor price for the retailer item considering a left-over effect and a delayed response of customers on the plurality of historical competitor prices. Furthermore, the system includes, determining from the plurality of dynamic weights an ideal dynamic weight associated with an optimal derived competitor price for each competitor amongst the set of competitors using a regression model. Further, the system includes, estimating sales units of the retailer item associated with the retailer using a retailer price within a price range specified by the retailer, the optimal derived competitor price for each competitor, and the competitor price elasticity associated with the ideal dynamic weight in a customized model. Further, the system includes, estimating an expected revenue and an expected margin associated with the retailer price within the price range specified by the retailer and the optimal derived competitor price for each competitor using the sales units of the retailer item. Furthermore, the system includes, estimating a yield of the retailer item associated with the retailer from the sales units of the retailer item along with the expected revenue and the expected margin associated with the retailer price within the price range specified by the retailer and the optimal derived competitor price for each competitor to obtain a plurality of yields associated with the set of competitors. Finally, the system includes, determining an ideal price of the retailer item for the retailer, wherein the ideal price of the retailer item within the price range specified by the retailer corresponds to an optimum yield amongst the plurality of yields.

The regression model receives an input comprising, (i) the retailer input and (ii) the plurality of derived competitor prices, and generates an output of the regression model comprising (i) a retailer price elasticity, (ii) the competitor price elasticity and (iii) the associated competitor price elasticity error for each competitor. The ideal dynamic weight for each competitor characterizes an ideal left-over effect and an ideal delayed response of customers. A dynamic weight corresponding to a scenario (i) is in range between 0 and 1, (ii) sum of the dynamic weight for each scenario equals to 1, and (iii) assignment of dynamic weight is based on nature of the item.

The customized model is used to estimate the sales units of the retailer item for a retailer price within the price range specified by the retailer by applying the plurality of historical retailer prices, the plurality of historical sales units, the retailer price elasticity, the competitor price elasticity and a distance ratio, wherein the distance ratio is derived from the optimal derived competitor price and each historical retailer price of the retailer item.

In yet another aspect, there is provided a computer program product comprising a non-transitory computer readable medium having a computer readable program embodied therein, wherein the computer readable program, when executed on a computing device causes the computing device for competitive pricing incorporating customer perception of competitor prices, by receiving for a retailer item (i) a retailer input comprising a plurality of historical sales units of the retailer item corresponding to a plurality of historical retailer prices of the retailer item and a plurality of miscellaneous data associated with a retailer. Further, the computer readable program includes, applying a plurality of dynamic weights on the plurality of historical competitor prices to obtain a plurality of derived competitor prices corresponding to a plurality of scenarios. Each derived competitor price of the plurality of derived competitor prices is obtained by capturing a perception of competitor price for the retailer item considering a left-over effect and a delayed response of customers on the plurality of historical competitor prices. Furthermore, the computer readable program includes, determining from the plurality of dynamic weights an ideal dynamic weight associated with an optimal derived competitor price for each competitor amongst the set of competitors using a regression model. Further, the computer readable program includes, estimating sales units of the retailer item associated with the retailer using a retailer price within a price range specified by the retailer, the optimal derived competitor price for each competitor, and the competitor price elasticity associated with the ideal dynamic weight in a customized model. Further, the computer readable program includes, estimating an expected revenue and an expected margin associated with the retailer price within the price range specified by the retailer and the optimal derived competitor price for each competitor using the sales units of the retailer item. Furthermore, the computer readable program includes, estimating a yield of the retailer item associated with the retailer from the sales units of the retailer item along with the expected revenue and the expected margin associated with the retailer price within the price range specified by the retailer and the optimal derived competitor price for each competitor to obtain a plurality of yields associated with the set of competitors. Finally, the computer readable program includes, determining an ideal price of the retailer item for the retailer, wherein the ideal price of the retailer item within the price range specified by the retailer corresponds to an optimum yield amongst the plurality of yields.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for competitive pricing incorporating customer perception of competitor prices according to some embodiments of the present disclosure.
FIG. 2A and FIG.2B, collectively referred as FIG. 2, is an exemplary flow diagram illustrating a method 200 for competitive pricing incorporating customer perception of competitor prices according to some embodiments of the present disclosure.
FIG. 3 illustrates an alternative representation of the flow diagram of FIG. 2, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Current techniques for competitive pricing are based on strategic decision making, data analysis, research analysis and so on. However, these techniques do not consider customer perception for competitive pricing. Embodiments of the present disclosure, provides a method for competitive pricing considering customer perception by capturing delayed response by the customers and ideal left-over effect of competitor price based on data captured during sales process of an item. The disclosed method captures item specific left-over effect by applying time specific dynamic weights for competitor prices to capture left-over competitor price effect. A regression model is developed by considering sales of the item, price of the item, different competitor derived prices with left-over effect and other factors such as weather conditions and the like. The disclosed method tries to maximize the accuracy of estimation of competitor elasticity through feedback mechanism by applying time specific dynamic weights to capture left-over competitor price effect specific to the item and delayed response by customers. In an embodiment of the present disclosure, the terms "retailer item" and "item" may be alternatively used.

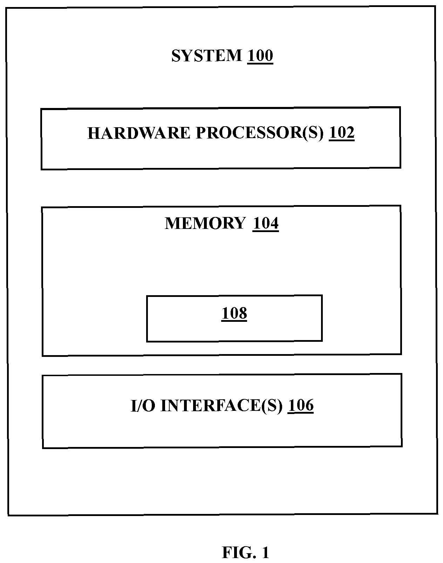

Referring now to the drawings, and more particularly to FIG. 1 through FIG. 3, where similar reference characters denote corresponding features consistently throughout the figures, there are shown preferred embodiments and these embodiments are described in the context of the following exemplary system and/or method.

FIG. 1 illustrates an exemplary block diagram of a system 100 configured for competitive pricing incorporating customer perception of competitor prices according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 104 includes a plurality of modules 108 such as a regression model, a customized model and the like. The plurality of modules includes programs or coded instructions that supplement applications or functions performed by the system 100 for executing different steps involved in the process for competitive pricing being performed by the system 100. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof. The plurality of modules can include various sub-modules (not shown).

Further, the memory 104 may include a database or repository. The memory 104 may comprise information pertaining to input(s)/output(s) of each step performed by the processor(s) 102 of the system 100 and methods of the present disclosure. In an embodiment, the database may be external (not shown) to the system 100 and coupled via the I/O interface 106.

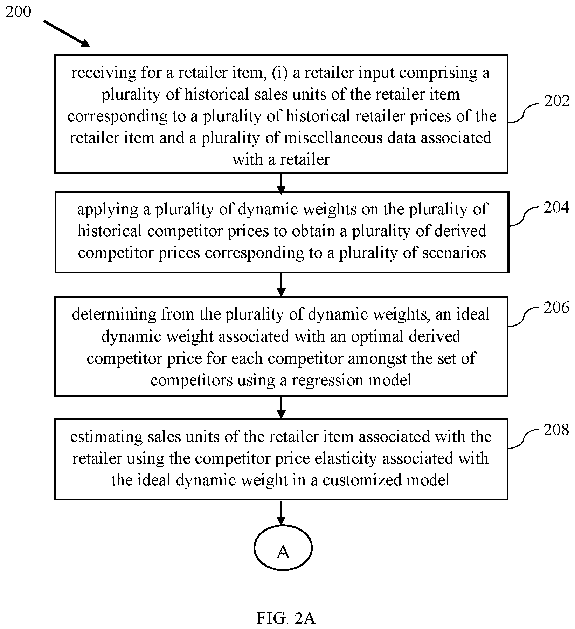

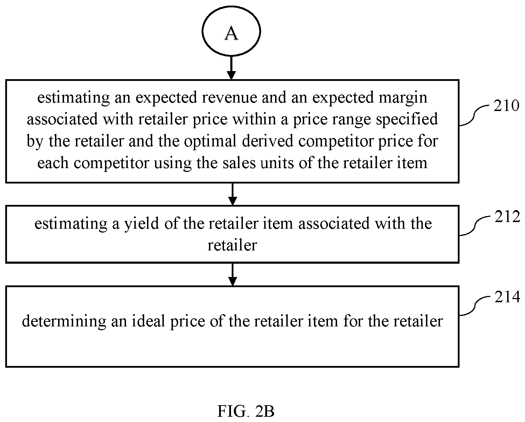

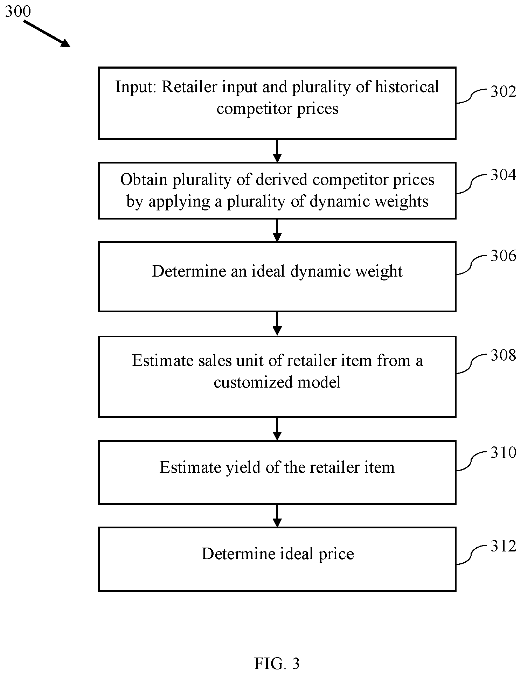

FIG. 2A and FIG. 2B, collectively referred as FIG.2, is an exemplary flow diagram illustrating a method 200 for competitive pricing incorporating customer perception of competitor prices according to some embodiments of the present disclosure. An alternative representation of FIG. 2 is provided in FIG. 3. In an embodiment, the system 100 comprises one or more data storage devices or the memory 104 operatively coupled to the one or more hardware processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2A, at step 202 of the method 200, one or more hardware processors are configured to receive (i) a retailer input, and (ii) a plurality of historical competitor prices for a retailer item. The retailer input includes a plurality of historical sales units of the retailer item which corresponds to a plurality of historical retailer prices of the retailer item and a plurality of miscellaneous data associated with a retailer. The plurality of historical competitor prices associates with a set of competitors for the plurality of time periods.

Retailer item specific historical sales units for a defined time period or interval such as day level is derived and it is integrated with other information for the same time period or with previous time period as required. The time interval considered for integration may vary depending on frequency of price changes which is again depending on the item. In an instance, perishable items may have more frequent price changes as compared to nonperishable items. Here, the time interval for perishable items such as fruits may be lesser as compared to nonperishable items and it may be in days or hours in few cases. In contrast, nonperishable items such as electronic items may have larger time interval as compared to perishable items and it may be in weeks or months. Ideal level of aggregation ensures to establish exact relationship between competitor price and sales of the retailer item. In an instance, if the nonperishable item is aggregated in hours, there may be many hours which have same price leading to no correlation between the competitor price and sales of the retailer item. Similarly, if the perishable item is aggregated in months, there will be many price changes within a month and the variation information may be lost.

The period of time interval such as hourly level or day level or week level or month level is decided by the system 100 by considering accuracy of competitor effect as explained in latter section. Price of the retailer item for the defined time interval, competitor prices, weather data and other factors like store location data are received for the same period. The miscellaneous data corresponding to the retailer include weather data, store location data and the like. Store location information is captured in the form of demographic variables of trade area of each store. Demographic variables are population, average income, ethnic wise population, average household size, population density and the like. Weather information is captured as weather parameters such as average temperature for a time period, precipitation, wind speed and the like. The competitors considered will depend on the distance between the retailer and competitor and also the trade area. The trade area is defined as the area surrounding a store in which the customers within the area will come to the store with the intention of buying the retailer item. The trade area will vary depending on the category. In an instance, category such as dairy such as milk may have 1 km as the trade area and category such as electronic items such as mobile may have 10 km trade area. The competitors within a trade area specific to the retailer item are considered and their historical prices are processed with dynamic weights to capture left - over effect.

Further at step 204 of the method 200, the one or more hardware processors are configured to apply a plurality of dynamic weights on the plurality of historical competitor prices. Further by applying the plurality of dynamic weights, a plurality of derived competitor prices corresponding to a plurality of scenarios is obtained. Here each derived competitor price of the plurality of derived competitor prices is obtained by capturing a perception of competitor price for the retailer item considering a left-over effect and a delayed response of customers on the plurality of historical competitor prices.

Typically, customers do not check competitor price changes constantly, which leads to a delay between the competitor price change and the recognition of the competitor price change by the customers. Also, a competitor price reduction may not trigger more demand if there is no immediate consumption need. Items that are perishable or with large size are less likely to be stored by retailers immediately after the competitor price drop. Besides, customers' reactions, the competitor price changes also vary across categories, stores and brands. People are less likely to stockpile brands that are frequently discounted, but may capitalize their storage capacity for less frequently promoted brands. Thus, as a result of these factors and the like, perception about competitor price has delayed response from customers.

When competitor price change for the retailer item happens, the retailer demand response of the retailer item happens after a certain period. The retailer demand response of the item does not happen immediately after the competitor price change. The delayed response may be due to delayed recognition of the competitor price change by customers or lack of immediate consumption need for the customers.

In addition, current demand for the retailer item may depend on competitor prices for multiple time periods of the item. Past competitor prices of the item over recent periods generate influences on current demand of the retailer item and the effect is termed as left-over effect.

The influence of historical competitor prices may have left- over effect about the competitor. Thus, delayed perception is defined as a perception about the competitor price of the item with cumulative effect of past competitor prices of the item with item specific delayed effect. The delayed perception about competitor price is captured by applying a set of dynamic weights for historical competitor prices to obtain derived competitor prices. An example of historical competitor prices for certain time periods is shown in table 1 and the derived competitor prices is shown in table 2.

**Table 1**

| Time Period | Competitor prices ($) |
|---|---|
| Current | 60 |
| Previous period 1 | 55 |
| Previous period 2 | 56 |
| Previous period 3 | 47 |
| Previous period 4 | 40 |
| Previous period 5 | 42 |

**Table 2**

| Customer perception about competitor price (Derived competitor price) | | | | |
|---|---|---|---|---|
| Scenario 1 | Scenario 2 | Scenario 3 | ...... | Scenario n |
| 57 | 55.5 | 60 | | 55.3 |

The value of weight is assigned to each historical recent time period and it varies between 0 and 1 with the condition that the sum of weights assigned to all the time periods is equal to 1. The recent period considered for weight assignment may vary depending on the item. In an instance it may vary for past few days for perishable items and for past few months for non-perishable items such as electronics items. It is ensured that the starting point of dynamic weight for each week is assigned in many ways to enable identification of ideal weight in shorter span of time with lesser memory usage of computer. In an instance, it is ensured that the starting point of the dynamic weight for the latest time period as 1 and decreasing towards 0. In another instance, the starting point may be assigned as 0.5 and moving towards either direction such as towards 0 or 1.

Next at step 206 of the method 200, the one or more hardware processors are configured to determine an ideal dynamic weight associated with an optimal derived competitor price for each competitor amongst the set of competitors using a regression model included in the plurality of modules 108 inside the memory 104 of the system 100. The regression model estimates a competitor price elasticity and an associated competitor price elasticity error for each competitor from the plurality of derived competitor prices. The distribution of dynamic weights across recent periods with the condition is that the sum of all the weights is equal to 1 and multiplication of dynamic weight with corresponding price of the week enables to simulate different price perception in customer mindset. Identification of ideal weights for each week from all possible generated scenarios with different price perception in customer mindset through suitable regression model enables to capture ideal left- over price effects in customer mindset. The dynamic weights for different scenarios shown in table 2 is provided in table 3 below:

**Table 3**

| Scenario 1 | Scenario 2 | Scenario 3 | ------- | Scenario n |
|---|---|---|---|---|
| Dynamic set of weights_1 | Dynamic set of weights_2 | Dynamic set of weights_3 | ------- | Dynamic set of weights_n |
| 0.6 | 0.3 | 1 | --- | 0.2 |
| 0.2 | 0.5 | 0 | --- | 0.3 |
| 0.1 | 0.1 | 0 | --- | 0.4 |
| 0.05 | 0.05 | 0 | --- | 0.05 |
| 0.025 | 0.025 | 0 | --- | 0.025 |
| 0.025 | 0.025 | 0 | --- | 0.025 |

As shown in Table 3, Scenario n has more left-over effect and delayed effect as compared to other scenarios and scenario 3 has no left-over effect and delayed response. Thus, perception about competitor price with left-over effect and delayed response is captured by using dynamic weights for different historical competitor prices of the item. It is a known fact that customer may have in their mind about the competitor price of recent times very well as compared to previous times and the pattern of remembrance by the customer will vary depending on the item. The magnitude of dynamic weight assigned to a week may be in a proportion to the remembrance by the customer. In an instance if the dynamic weight assigned to a week is higher as compared to other week, it indicates that the competitor price of the week is remembered by the customer more as compared to other week. Thus, the dynamic weight plays a role in simulating different scenarios in which each scenario represents customer remembrance pattern which is unique. In an instance, considering scenario 3, recent week has the maximum weight which results that the item price is 60 which indicates there is no delay effect. In another instance, considering scenario 2, middle weeks has more weight as compared to recent week, and it results the customer perception about the competitor price as 55.3 even though the current competitor price is 60 which indicates that the delay effect is medium. In another instance, considering scenario 1, previous week has highest weight, and it results the customer perception about the competitor price as 57 even though the current competitor price is 60 which indicates that the delay effect is less. The delay effect for scenario 2 is more than scenario 3. Thus, the unequal distribution of dynamic weight across recent weeks/periods enables to simulate different customer perception about competitor price of the item.

The effect of competitor price on the sales of the item in a retailer store is established through a statistical model. The regression model is used to establish a relationship between an event, which is sales of the item and a cause which is the competitor price. The simulated competitor prices as explained previously, are mapped with sales of item through regression model. Each regression coefficient captures the effect in the form of coefficient. Due to changing weights different scenarios are generated with competitor prices. For each scenario, regression is run and evaluated for its performance in terms of accuracy. Performance is measured in terms of error of the coefficient. Identification of ideal weights for each week from all possible generated scenarios with different price perception in customer mindset through suitable regression model enables to capture ideal left-over price effect in customer mindset.

The sales of the item are modelled with retailer price and derived competitor prices with left-over and delayed effect and other sales drivers in many ways within the scope of present disclosure. In an instance, the sales of the item are measured in terms of number of units sold on a particular period and log of units is also calculated and they are used as dependent variable in the regression equation. The log of unit price of the retailer is used as one of the independent variable and corresponding coefficient and residual is estimated. The estimated coefficient is termed as price elasticity for the retailer item. The estimated residuals are modelled with derived competitor prices with left-over and delayed effect and other sales drivers and respective coefficient and their error is derived. Competitor prices under different scenarios for each potential competitor is noted as derived competitor price and used as one of the inputs for independent variables in the regression model. Regression model is run with open-source software such as R, Python and the like and the output such as competitor price elasticity and associated competitor price elasticity error is stored in a database inside the memory 104. During multiple regression, the standard error of competition coefficients measures how precisely the regression model estimates the competition coefficient's unknown value. The smaller the standard error, the more precise the estimate. The coefficient against competitor_1_scenario_1 is noted as competitor_1_scenario_1_elasticity and the error for the competitor_1_scenario_1_elasticity is noted as competitor_1_scenario_1_error. In similar way, the other elasticities and respective errors are estimated. Collectively it is called the competitor price elasticity and the associated competitor price elasticity error. Thus, elasticity values and their errors are referred from the regression output and considered for next level processing. Ideal left-over, delayed effect and ideal time period are identified by locating the weights that minimize the error for competitor elasticity for different scenarios.

Further at step 208 of the method 200, the one or more hardware processors are configured to estimate sales units of the retailer item associated with the retailer using the competitor price elasticity associated with the ideal dynamic weight in a customized model included in the plurality of modules 108 inside the memory 104 of the system 100. The sales units for different retailer price within the price range specified by the retailer with improved accuracy is estimated using the customized model. The customized model may be developed in many ways depending on nature of specialty of retailer. Equation 1 below represents the customized model,

$$\mathrm{u} = u_0 \times \frac{\left(\frac{p}{p_0}\right)^{elasticity}}{e^{\Sigma(cc_i \times d_i)}} \tag{1}$$

wherein, $u_0$ may be derived in multiple ways. In one instance, latest historical price of the item is noted as $p_0$, corresponding sales units is noted as $u_0$. For example, it may be actual price of the item, $p_0$ which was kept in the store for last week and actual sales units sold, $u_0$ in the store for the last week. In another instance, '$u_0$' is predicted from a Machine Learning model for historical average actual selling price '$p_0$', '$p$' is the individual price point within the price range specified by the retailer which is going to be identified as ideal price and '$u$' is the units for the corresponding price point. Elasticity is the price elasticity of the item which is derived from regression outputs as discussed in the previous step. In some instances, it may be used from the standard values available from crawling of relevant information from meta-analysis published in the standard literatures or values suggested from generative artificial intelligence framework trained with suitable text materials such as trained with retail research journals and the like. $cc_i$ is the competition coefficient for competitor '$i$' which is derived from regression outputs as discussed in previous step, '$d_i$' is the distance ratio from competitor. The distance ratio is derived from the optimal derived competitor price and each historical retailer price of the retailer item using the relationship as per equation 2:

$$(retailer\ price - derived\ competitor\ price)/derived\ competitor\ price \tag{2}$$

The retailer price of an item for a particular point in time is considered and corresponding derived competitor price which is derived with respect to the time point considered and distance ratio is calculated as per the equation 2. The point in time may be the point of time for which the price of item is going to be identified. Among the information that are available for a particular point in time such as today or yesterday, the information such as historical retailer item sales unit, retailer price elasticity, competitor price elasticity and a distance ratio are made available as explained earlier and only retailer test price is varied within the price range and corresponding sales units is estimated using a customized model. Retailer test price is defined as the price that is going to be validated by applying different values of retailer price and by keeping other values as same as derived for a particular point of time in the customized model and validating the resulted sales units for each value of retailer test price. Thus, all the price points within the price range are passed into the customized model and sales units is estimated for each price point.

After estimating the sales units at step 210 of the method 200, the one or more hardware processors are configured to estimate an expected revenue and an expected margin associated with a retailer price within a price range specified by the retailer and the optimal derived competitor price for each competitor using the sales units of the retailer item. The expected sales units for a given price is used to derive expected revenue and expected margin for a given price as per below equation 3:

$$r = u \times p \text{ and } m = u \times (p - c) \tag{3}$$

wherein 'r' is revenue for the price point '$p$' and '$m$' is margin for price point 'p' and cost 'c'.

Further at step 212 of the method 200, the one or more hardware processors are configured to estimate a yield of the retailer item associated with the retailer from the sales units of the retailer item along with the expected revenue and the expected margin associated with the retailer price within the price range specified by the retailer and the optimal derived competitor price for each competitor to obtain a plurality of yields associated with the set of competitors. The yield of the item is calculated using the equation 4 below,

$$Yield = (w_1 \times u) + (w_2 \times r) + (w_3 \times m) \tag{4}$$

where '$w_1$', '$w_2$' and '$w_3$' are the objective weights.

Finally, at step 214 of the method 200, the one or more hardware processors are configured to determine an ideal price of the retailer item for the retailer. The ideal price of the retailer item within the price range specified by the retailer corresponds to an optimum yield amongst the plurality of yields. Yield is weighted measure of sales units, revenue and margin and the weights noted as 'objective weights' may be fixed or decided by the user based on the retailer objective for price optimization. Yield is estimated by applying the required inputs as per equations 1 to 3. For each item-store combination or item cluster combinations, yield is estimated for varying price point of the item which is going to be priced, and the optimal or ideal price is determined as the price where the yield is the optimum. It is to be noted that when price is increased from lower range to upper range within the price range specified by the retailer, the yield will be maximum at one point of retailer test price and the point is noted as optimal point and the yield is noted as optimal yield and corresponding price point is noted as ideal price point. The price range specified by the retailer will vary depending on the retailer. Some retailers may follow premium pricing as their business strategy and it will guide to decide the range of price to be considered. Other retailers may follow low pricing due to their business strategy and many more such scenarios and they will guide to decide the range of price that need to be considered for ideal price point identification.

The embodiments of the present disclosure provide a method for competitive pricing using customer perception of competitor prices. The disclosed method considers determining customer perception of competitor prices by capturing ideal left-over effect of competitor price based on data captured during sales of the item. The disclosed method utilizes a customized model for determining sales of the item and then further from the sales, yield of the item is estimated. A set of dynamic weights are applied to maximize the customer elasticity thereby capturing carry over competitor price effect of the item.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200) comprising:

> receiving for a retailer item, via one or more hardware processors, (i) a retailer input comprising a plurality of historical sales units of the retailer item corresponding to a plurality of historical retailer prices of the retailer item and a plurality of miscellaneous data associated with a retailer, wherein the plurality of miscellaneous data comprises weather data and location data corresponding to a plurality of time periods, and (ii) a plurality of historical competitor prices associated with a set of competitors for the plurality of time periods (202);
>
> applying, via the one or more hardware processors, a plurality of dynamic weights on the plurality of historical competitor prices to obtain a plurality of derived competitor prices corresponding to a plurality of scenarios, wherein each derived competitor price of the plurality of derived competitor prices is obtained by capturing a perception of competitor price for the retailer item considering a left-over effect and a delayed response of customers on the plurality of historical competitor prices (204);
>
> determining from the plurality of dynamic weights, via the one or more hardware processors, an ideal dynamic weight associated with an optimal derived competitor price for each competitor amongst the set of competitors using a regression model, wherein the regression model estimates a competitor price elasticity and an associated competitor price elasticity error for each competitor from the plurality of derived competitor prices, and wherein the ideal dynamic weight associates with a minimum competitor price elasticity error (206);
>
> estimating, via the one or more hardware processors, sales units of the retailer item associated with the retailer using a retailer price within a price range specified by the retailer, the optimal derived competitor price for each competitor, and the competitor price elasticity associated with the ideal dynamic weight in a customized model (208);
>
> estimating, via the one or more hardware processors, an expected revenue and an expected margin associated with the retailer price within the price range specified by the retailer and the optimal derived competitor price for each competitor using the sales units of the retailer item (210);
>
> estimating, via the one or more hardware processors, a yield of the retailer item associated with the retailer from the sales units of the retailer item along with the expected revenue and the expected margin associated with the retailer price within the price range specified by the retailer and the optimal derived competitor price for each competitor to obtain a plurality of yields associated with the set of competitors (212); and
>
> determining, via the one or more hardware processors, an ideal price of the retailer item for the retailer, wherein the ideal price of the retailer item within the price range specified by the retailer corresponds to an optimum yield amongst the plurality of yields (214).

2. The method of claim 1, wherein the regression model

> receives an input comprising, (i) the retailer input and (ii) the plurality of derived competitor prices; and
> generates an output comprising, (i) a retailer price elasticity, (ii) the competitor price elasticity and (iii) the associated competitor price elasticity error for each competitor.

3. The method of claim 1, wherein the ideal dynamic weight for each competitor characterizes an ideal left-over effect and an ideal delayed response of customers.

4. The method of claim 1, wherein a dynamic weight corresponding to a scenario (i) is in range between 0 and 1, (ii) sum of the dynamic weight for each scenario equals to 1, and (iii) assignment of dynamic weight is based on nature of the item.

5. The method of claim 1, wherein the customized model is used to estimate the sales units of the retailer item for a retailer price within the price range specified by the retailer by applying the plurality of historical retailer prices, the plurality of historical sales units, the retailer price elasticity, the competitor price elasticity and a distance ratio , wherein the distance ratio is derived from the optimal derived competitor price and each historical retailer price of the retailer item.

6. A system (100), comprising:

a memory (104) storing instructions;

one or more communication interfaces (106); and

one or more hardware processors (102) coupled to the memory (104) via the one or more communication interfaces (106), wherein the one or more hardware processors (102) are configured by the instructions to:

receive for a retailer item (i) a retailer input comprising a plurality of historical sales units of the retailer item corresponding to a plurality of historical retailer prices of the retailer item and a plurality of miscellaneous data associated with a retailer, wherein the plurality of miscellaneous data comprises weather data and location data corresponding to a plurality of time periods, and (ii) a plurality of historical competitor prices associated with a set of competitors for the plurality of time periods;

apply a plurality of dynamic weights on the plurality of historical competitor prices to obtain a plurality of derived competitor prices corresponding to a plurality of scenarios, wherein each derived competitor price of the plurality of derived competitor prices is obtained by capturing a perception of competitor price for the retailer item considering a left-over effect and a delayed response of customers on the plurality of historical competitor prices;

determine from the plurality of dynamic weights an ideal dynamic weight associated with an optimal derived competitor price for each competitor amongst the set of competitors using a regression model, wherein the regression model estimates a competitor price elasticity and an associated competitor price elasticity error for each competitor from the plurality of derived competitor prices, and wherein the ideal dynamic weight associates with a minimum competitor elasticity error;

estimate sales units of the retailer item associated with the retailer using a retailer price within a price range specified by the retailer, the optimal derived competitor price for each competitor, and the competitor price elasticity associated with the ideal dynamic weight in a customized model;

estimate an expected revenue and an expected margin associated with the retailer price within the price range specified by the retailer and the optimal derived competitor price for each competitor using the sales units of the retailer item;

estimate a yield of the retailer item associated with the retailer from the sales units of the retailer item along with the expected revenue and the expected margin associated with the retailer price within the price range specified by the retailer and the optimal derived competitor price for each competitor to obtain a plurality of yields associated with the set of competitors; and

determine an ideal price of the retailer item for the retailer, wherein the ideal price of the retailer item within the price range specified by the retailer corresponds to an optimum yield amongst the plurality of yields.

7. The system of claim 6, wherein the regression model

receives an input comprising, (i) the retailer input and (ii) the plurality of derived competitor prices; and

generates an output comprising, (i) a retailer price elasticity, (ii) the competitor price elasticity and (iii) the associated competitor price elasticity error for each competitor.

8. The system of claim 6, wherein the ideal dynamic weight for each competitor characterizes an ideal left-over effect and an ideal delayed response of customers.

9. The system of claim 6, wherein a dynamic weight corresponding to a scenario (i) is in range between 0 and 1, (ii) sum of the dynamic weight for each scenario equals to 1, and (iii) assignment of dynamic weight is based on nature of the item.

10. The system of claim 6, wherein the customized model is used to estimate the sales units of the retailer item for a retailer price within the price range specified by the retailer by applying the plurality of historical retailer prices, the plurality of historical sales units, the retailer price elasticity, the competitor price elasticity and a distance ratio , wherein the distance ratio is derived from the optimal derived competitor price and each historical retailer price of the retailer item.

11. One or more non-transitory machine-readable information storage mediums comprising one or more instructions which when executed by one or more hardware processors cause:

receiving for a retailer item, (i) a retailer input comprising a plurality of historical sales units of the retailer item corresponding to a plurality of historical retailer prices of the retailer item and a plurality of miscellaneous data associated with a retailer, wherein the plurality of miscellaneous data comprises weather data and location data corresponding to a plurality of time periods, and (ii) a plurality of historical competitor prices associated with a set of competitors for the plurality of time periods;

applying a plurality of dynamic weights on the plurality of historical competitor prices to obtain a plurality of derived competitor prices corresponding to a plurality of scenarios, wherein each derived competitor price of the plurality of derived competitor prices is obtained by capturing a perception of competitor price for the retailer item considering a left-over effect and a delayed response of customers on the plurality of historical competitor prices;

determining from the plurality of dynamic weights, an ideal dynamic weight associated with an optimal derived competitor price for each competitor amongst the set of competitors using a regression model, wherein the regression model estimates a competitor price elasticity and an associated competitor price elasticity error for each competitor from the plurality of derived competitor prices, and wherein the ideal dynamic weight associates with a minimum competitor price elasticity error;

estimating sales units of the retailer item associated with the retailer using a retailer price within a price range specified by the retailer, the optimal derived competitor price for each competitor, and the competitor price elasticity associated with the ideal dynamic weight in a customized model;

estimating an expected revenue and an expected margin associated with the retailer price within the price range specified by the retailer and the optimal derived competitor price for each competitor using the sales units of the retailer item;

estimating a yield of the retailer item associated with the retailer from the sales units of the retailer item along with the expected revenue and the expected margin associated with the retailer price within the price range specified by the retailer and the optimal derived competitor price for each competitor to obtain a plurality of yields associated with the set of competitors; and

determining an ideal price of the retailer item for the retailer, wherein the ideal price of the retailer item within the price range specified by the retailer corresponds to an optimum yield amongst the plurality of yields.

12. The one or more non-transitory machine-readable information storage mediums of claim 11, wherein the regression model

receives an input comprising, (i) the retailer input and (ii) the plurality of derived competitor prices; and

generates an output comprising, (i) a retailer price elasticity, (ii) the competitor price elasticity and (iii) the associated competitor price elasticity error for each competitor.

13. The one or more non-transitory machine-readable information storage mediums of claim 11, wherein the ideal dynamic weight for each competitor characterizes an ideal left-over effect and an ideal delayed response of customers.

14. The one or more non-transitory machine-readable information storage mediums of claim 11, wherein a dynamic weight corresponding to a scenario (i) is in range between 0 and 1, (ii) sum of the dynamic weight for each scenario equals to 1, and (iii) assignment of dynamic weight is based on nature of the item.

15. The one or more non-transitory machine-readable information storage mediums of claim 11, wherein the customized model is used to estimate the sales units of the retailer item for a retailer price within the price range specified by the retailer by applying the plurality of historical retailer prices, the plurality of historical sales units, the retailer price elasticity, the competitor price elasticity and a distance ratio , wherein the distance ratio is derived from the optimal derived competitor price and each historical retailer price of the retailer item.

SYSTEM 100

HARDWARE PROCESSOR(S) 102

MEMORY 104

108

I/O INTERFACE(S) 106

FIG. 1

200

receiving for a retailer item, (i) a retailer input comprising a plurality of historical sales units of the retailer item corresponding to a plurality of historical retailer prices of the retailer item and a plurality of miscellaneous data associated with a retailer — 202

applying a plurality of dynamic weights on the plurality of historical competitor prices to obtain a plurality of derived competitor prices corresponding to a plurality of scenarios — 204

determining from the plurality of dynamic weights, an ideal dynamic weight associated with an optimal derived competitor price for each competitor amongst the set of competitors using a regression model — 206

estimating sales units of the retailer item associated with the retailer using the competitor price elasticity associated with the ideal dynamic weight in a customized model — 208

A

FIG. 2A

A

estimating an expected revenue and an expected margin associated with retailer price within a price range specified by the retailer and the optimal derived competitor price for each competitor using the sales units of the retailer item ⌐ 210

estimating a yield of the retailer item associated with the retailer ⌐ 212

determining an ideal price of the retailer item for the retailer ⌐ 214

FIG. 2B

300

| Input: Retailer input and plurality of historical competitor prices | ⟶ 302 |

↓

| Obtain plurality of derived competitor prices by applying a plurality of dynamic weights | ⟶ 304 |

↓

| Determine an ideal dynamic weight | ⟶ 306 |

↓

| Estimate sales unit of retailer item from a customized model | ⟶ 308 |

↓

| Estimate yield of the retailer item | ⟶ 310 |

↓

| Determine ideal price | ⟶ 312 |

FIG. 3

EP 4 607 431 A1

Europäisches
Patentamt
European
Patent Office
Office européen
des brevets

# EUROPEAN SEARCH REPORT

Application Number

EP 25 15 7853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/282667 A1 (CEREGHINI PAUL M [US] ET AL) 6 December 2007 (2007-12-06)<br>* paragraph [0003] *<br>* paragraph [0017] *<br>* paragraph [0058] *<br>* paragraph [0108] - paragraph [0110] *<br>* paragraph [0153] *<br>* paragraph [0156] *<br>- - - - - | 1-15 | INV.<br>G06Q30/0201<br>G06Q30/0202<br>G06Q30/0204<br>G06Q30/0283 |
| A | US 2017/109767 A1 (SHPANYA ARIE [US] ET AL) 20 April 2017 (2017-04-20)<br>* paragraph [0007] *<br>* paragraph [0013] - paragraph [0014] *<br>* paragraph [0048] - paragraph [0050] *<br>* paragraph [0053] - paragraph [0054] *<br>* paragraph [0057] *<br>* paragraph [0060] *<br>* paragraph [0062] *<br>* paragraph [0081] *<br>* paragraph [0092] *<br>* paragraph [0129] *<br>* paragraph [0152] - paragraph [0156] *<br>* paragraph [0158] - paragraph [0159] *<br>* paragraph [0165] *<br>* paragraph [0167] - paragraph [0168] *<br>* paragraph [0170] - paragraph [0176] *<br>- - - - - | 1-15 | |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 30 April 2025 | Bharucha, Zubin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

17

## ANNEX TO THE EUROPEAN SEARCH REPORT
## ON EUROPEAN PATENT APPLICATION NO.

EP 25 15 7853

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | Publication date | Patent family member(s) | Publication date |
|---|---|---|---|
| US 2007282667 A1 | 06-12-2007 | NONE | |
| US 2017109767 A1 | 20-04-2017 | CA 2952034 A1 | 17-12-2015 |
| | | US 2017109767 A1 | 20-04-2017 |
| | | WO 2015192106 A1 | 17-12-2015 |

EPO FORM P0459

For more details about this annex : see Official Journal of the European Patent Office, No. 12/82

**EP 4 607 431 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421012544